**Europäisches Patentamt**

**European Patent Office**

**Office européen des brevets**

(11) Veröffentlichungsnummer: **0 230 054**
A1

## EUROPÄISCHE PATENTANMELDUNG

(21) Anmeldenummer: **86118140.2**

(22) Anmeldetag: **30.12.86**

(51) Int. Cl.⁴: **F 01 C 1/344,** F 01 C 21/08, F 02 B 53/08

(30) Priorität: **30.12.85 YU 2065/85**

(43) Veröffentlichungstag der Anmeldung: **29.07.87**
**Patentblatt 87/31**

(84) Benannte Vertragsstaaten: **AT BE CH DE ES FR GB GR IT LI LU NL SE**

(71) Anmelder: **Mlinaric, Branko, Miljackina 44a, Zagreb (YU)**

(72) Erfinder: **Mlinaric, Branko, Miljackina 44a, Zagreb (YU)**

(74) Vertreter: **Bauer, Robert, Dipl.-Ing. et al, Thomas-Wimmer-Ring 14, D-8000 München 22 (DE)**

(54) **Die Rotations-Lamellenmaschine für mehrfache Zuwendung.**

(57) Das Prinzip der Arbeit der Rotations-Lamellenmaschine (RLS) ist volumetrisch (wie bei den Kolbenmaschinen). Die Grundkonstruktionscharakteristik bietet eine mehrfache Anwendung, wobei die vorgeschlagene Lösung wie folgt angewandt werden kann:

- beim Mediummotor, Kompressor, Vakuumpumpe
- Flüssigkeitspumpe
- Verbrennungsmotor

Der Walzenläufer (Rotor) hat im Querschnitt einen Kreisring (hohle Walze) mit gerilltem Rand, wo die Lamellen zentrisch mit der Welle eingelegt sind und exzentrisch im Zylindergehäuse placiert ist. Zwei gegenüber liegende Lamellen (ein Paar) sind identisch in der Form und der Abstand zwischen diesen wird durch die Grenzschienen und Spiralfeder gesichert. Während der Umdrehung des Rotors treten die Lamellen aus ihrem Lager aus resp. ein, während im Hohlraum des Rotors ihre Kreuzung ermöglicht wird.

Durch aufeinanderfolgende Veränderung der Grösse des Raums (wo sich das Arbeitsmedium befindet) wo zwei benachbarte Lamellen sind, erfolgt die Energieumwandlung.

Durch derartige geometrische Konstruktionsverhältnisse kann die Exzentrizität erhöht, der Aussendurchschnitt des Rotors verringert und die Welle mit genügendem Querschnitt (nachdem sie ausserhalb des Hohlraums des Rotors ist) eingebaut werden und bei gleichem Durchschnitt und Länge des Zylindergehäuses eine grössere Leistung als bei klassischen Maschinen erlangen.

BEGLAUBIGTE ÜBERSETZUNG ( aus der Kroatischen )

MLINARIĆ BRANKO

DIE ROTATIONS-LAMELLENMASCHINE FUR MEHRFACHE ZUWENDUNG

- Mediummotor, Kompressor, Vakuumpumpe, Flüssigkeitspumpe, Verbrennungsmotor-

## Das Erfindungsgebiet

Die Erfindung bezieht sich auf die Energieumwandlungsmaschinen. Laut der internationalen Klassifizierung kann die Erfindung in folgende Gebiete angeordnet werden:

- In das Gebiet des Maschinenwesens mit dem Symbol F 01 19/02. Damit sind Maschinen allgemein oder Vortriebsmaschinen mit bewegter Scheidewand definiert.

- In das Gebiet mit dem Symbol F 02 B 53/00. Damit sind Maschinen mit Rotations-und oszillierenden Kolben bestimmt.

## Das technische Problem

Das technische Problem lautet: Auf welche Weise werden die geometrische Konstruktionsverhältnisse bestimmt um eine grössere Exzentrizität bzw. höhere Maschinenleistung zu erreichen. In das Zylindergehäuse wird der hohle Walzenläufer mit gerilltem Rande exzentrisch eingesetzt. Die Lamellen welche sich frei durch die Rillen bewegen, kreuzen sich während der Rotation im Hohlraum des Rotors.

## Der Zustand der Technik

Die Energiewandlung wird hilfs der Kolbenmaschinen am Prinzip der Reihenveränderung des Arbeitsstoffmediumraumes durchgeführt (der volumetrische Grundsatz). Die Kolbenarbeitsmaschinen sind: Kolbenkompressoren, Flüssigkeit- und Luftpumpen. Die Kolbenkraftmaschinen sind: Kolbendampfmaschinen (Kondensations und Auspuffmaschinen), Druckluft-Kolbenmaschinen, Hydrokolbenmaschinen (ohne Expansion), Otto und Dieselmotoren. Diese Maschinen werden durch Arbeitszylinder, der auf einer Seite mit einen Deckel geschlossen und auf der anderen Seite mit einem beweglichen Kolben ausgerüstet ist, gekennzeichnet.

Dabei wird die Kurbenwelle mit dem Kolben durch das entsprechende Kolbenwerk verbunden. Das Kolbenwerk wandelt die geradelinige Bewegund des Kolbens in eine Kreisbewegung der Kurbenwelle um. Dabei entwicklen sich freie Kräfte (Mediumdrücke, Scheuder- und Inertialkräfte, Verdrehungsvibrationen) die abgeglicht werden müssen. Deswegen müssen entsprechende Konstruktiolösungen, Stoffe, Bearbeitungen entwickelt werden, was die Produktions- und Montagefrist verlängert. Die Drehzahl ist begränzt, der Ausnutzungsgrad liegt niedrig; trotzdem besitzen diese Maschinen eine hohe Anwendungstuffe. In der Gruppe der Kolbenarbeitsmaschinen befinden sich auch die Zahnradpumpe (mit Innen – oder Aussenverzahnung), die Schraubenradpumpe, die Drehkolbenschaufelpumpe, die Radialkolbenpumpe, der Rotationslamellen-kompressor und der Wankelmotor. Der Wankel 4-Takt Rotationsverbrennungsmotor besitzt einen dreieckigen Kreiskolben, welcher sich in deim unregelmässig geformten Gehäuse befindet. Während einer Umdrehung des Kolbens werden drei 4-Takt Prozesse durchgeführt, was einer klasischen Ausführung des Dreizylinder – 2 Taktmotors entspricht. Die exzentrische Welle dreht sich dabei dreimal um. Die Vorteile dieser Maschine sind: die Kompaktausführung, eine geringe Anzahl der Bewegungsteile, Rausch – und Vibrationsarmer Betrieb.

Der Nachteil dieser Maschine ist: der hohe spezifische Brennstoffverbrauch, der maximale Drehmoment wird bei der hohen Drehzahl erreicht (deswegen werden Zweikolbenmotoren in die Kraftafahrzeuge eingebaut), eine kurze Lebensdauer. In der Entwicklungstuffe befinden sich grosse für den Schiffsbetrieb geeignete Diesel-Maschinen.

Turbomaschinen sind Rotationsmaschinen welche die Strömungsenergie der Fluiden aus dem Hochdruckraum in den Raum des niedrigen Druckes in mechanische Arbeit umwandeln, und umgekehrt (das Strömungsarbeitsprinzip). Die

Turbokraftmaschinen sind:Dampfturbinen, Gasturbinen, Düsenmotoren. Die Turboarbeitsmaschinen sind: Turbopumpen, Ventilatoren und Turbokompressoren. Die Kreisbewegung des Rotors garantiert einen leisen nicht pulsierenden Betrieb. Dadurch können folgende Vorteile erreicht werden: eine hohe Drehzahl, grosse Kapazitäten und ein breites Anwendungsbereich. Trotzdem sind diese Maschinen nicht für kleine Leistungen geeignet. Ihre Herstellung ist kompliziert und teuer.

– Die Rotations-Lamellenmaschine für mehrfache Zuwendung befindet sich im Anwendungsbereich das zwischen den Kolben und Turbomaschinenanwendungsgebiete liegt. Die Konstruktion dieser Maschinen ist nicht mit der Konstruktion der klassischen Maschinen übereinstimmend. Die Maschine kann als Arbeits – oder Kraftmaschine benütztwerden; enthält nur rotierende Massen, was zu einem guten statischen sowie dynamischen Abgleich führt. Auf diese Weise kann eine hohe Drehzahl sowie Leistung erreicht werden. Ebenso können solche Maschinen in relativ kleinerer Dimensionen hergestellt werden. Gute Eigenschaften der Kolben-und Turbomaschinen werden auf diesem Wege vereinigt.
Die Herstellung und die Wartung der Maschine ist einfach.


## Die Beschreibung des technischen Problems

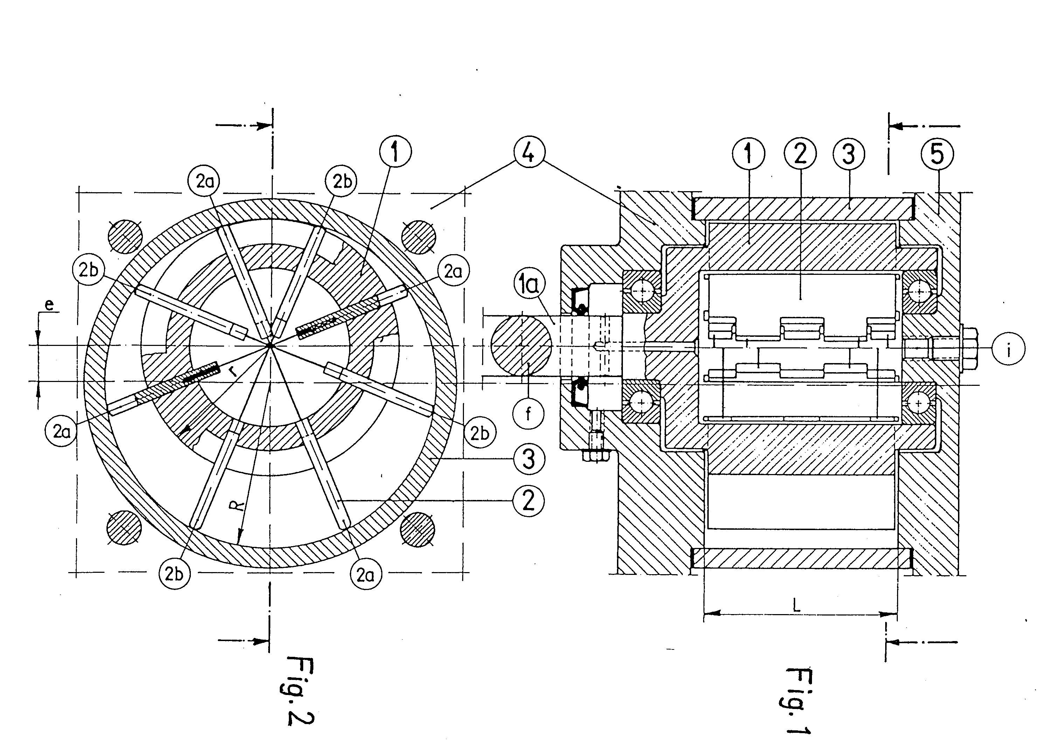

Die Rotationslamellenmaschine (im weiteren Text als RLS bezeichnet) ist in Abb. 1 bis 6 dargestellt. Die Maschine wird aus folgenden Elementen zusammengesetzt: der Walzenläufer (Rotor) mit der Welle (1a), die Lamellen (2), das Zylindergehäuse (3) und das Gehäuse für die Walzenlager (4) und (5). Der Querschnitt des Walzenläufers (1) stellt einen Kreisring mit gerilltem Rande dar.
Die freie Lamellen werden in die Rillen eingesetzt (2). Der Rotor (1) wird zentrisch mit der Welle (1a) rotiert. Die Welle ist im Zylindergehäuse exzentrisch placiert (3). Der Wellenzapfen (1a) und die Bohrung des Rotors stützen sich auf die Walzenlager des Gehäuses (4) (5). Zwei gegenüber liegende Lamellen (ein Paar) (2) sind identisch in der Form. Der Abstand zwischen der Lamellen wird während des Stillstandes der Maschine(so dass die Lamellen nicht ins Zentrum des hohlen Rotors (1) durchfallen) durch die Grenzschienen und Spiralfeder versichert. Die Form und die Reihenfolge des Einlegens der Lamellenpaare (2) (2b) in die Rillen des Rotors (1) ist auf der Abb. 2 dargestellt.

Während der Umdrehung des Rotors wirkt die Zentrifugalkraft auf die freie Lamellen (2). Dadurch schmiegen sich die äussere Mantellinien der Lamellen an die Innenfläche des Zylindergehäuses (3) und die Kreuzung erfolgt im Hohlraum des Rotors (1). Die Energieumwandlung erfolgt durch die aufeinanderfolgende Veränderung des Raumes zwischen zwei Nachbarlamellen (2) wo sich das Arbeitsmedium befindet.

Das Einziehen der Lamellen (2) wird nicht durch den Rotor (1) begrenzt, (die Welle (1a) befindet sich nicht im Hohlraum des Rotors (1)) was eine Verkleinerung des Rotor-Durchmessers (2r), eine Exzentritätsvergrösserung (e) und den Einbau einer Welle (1a) mit entsprechendem Querschnitt (f) erlaubt. Dadurch kann, im Vergeich mit klassischen Maschinen, mit einem identischen Durchmesser (2R) und derselben Länge (L) des Zylindergehäuses eine höhere Leistung erzielt werden.

Um einen entsprechenden Kompressionsraum für den gewünschten Betriebsvorgang (Otto oder Diesel) der RLS (Verbrennungsmotor) zu erreichen muss folgendes durchgeführt werden:

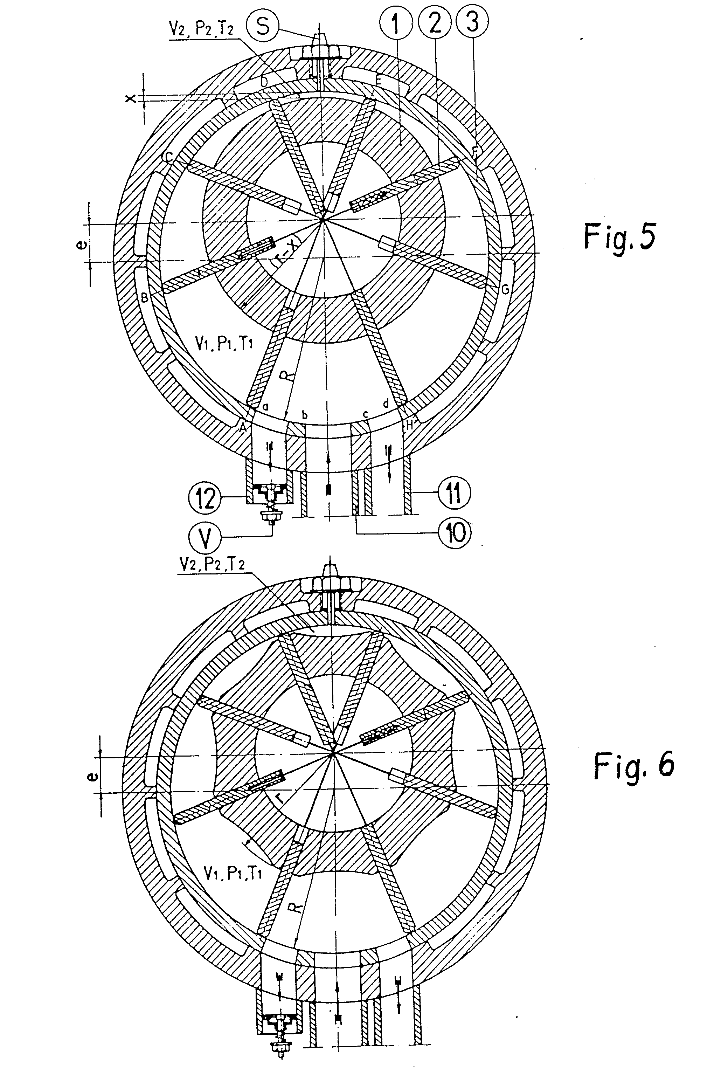

- eine Radiusverkürzung (r) des Rotors für den Wert (x), Abb 5, oder
- Formierung des Rotors (1) im Einklang mit der Abb. 6 ohne der Radiusverkürzung.

Das Schmier - und Kühöl für die Lamellen und Lager wird durch die Offnung (i) dem Rotor (1) zugeleitet.

Die Anwendung der RLS wird durch das Zylindergehäuse (3) mit Anschlüssen bestimmt. Der Grundsatz des RLS - Betriebes ist volumetrisch (wie bei Kolbenmaschinen).

- Der Mediummotor ist eine Betriebs - RLS (Abb s). Das Medium des Anfangszustandes ($P_1$ $T_1$) wird durch den Anschluss (6) zu dem Raum zwischen Rotor (1) und Gehäuse (3,4,5) eingeführt. Dadurch wird das Drehen des Rotors (1) im Sinne des Uhrenzeigers verursacht. Wenn die äussere Mantellinie der Lamelle (A) den Rand (a) am Zylindergehäuse (3) verschliesst, befindet sich der Anfangsvolumen ($V_1$) des Mediums im Raume der mit der Lamelle (A), (B), ROtor (1) und Gehäuse (3,4,5) begrenzt ist. Das Medium expandiert bis ($P_2$$T_2$) und Volumen ($V_2$), d.h. bis zu dem Moment wenn die Lamelle (B) den Rand (b) des Zylindergehäuses (3) überschreitet und dadurch die Verbindung mit dem Ausgangsanschluss (7) öffnet. Solche aufeinanderfolgende Vorgänge geschehen zwischen irgendwelchenzwei Lamellen von Rande (a) bis (b) am Zylindergehäuse (3). Auf der Welle (1a) wird die mechanische Arbeit erzeugt.

- Der Kompressor und die Vakuumpumpe stellen Arbeits - RLS dar (Abb.3) Während der Rotor (1) in umgekehrter Richtung des Uhrenzeigers rotiert, wird der Gas am Anschluss (7) seitens der Lamellen (E) und (D) erfasst. Der Vorgang dauert so lange bis die Lamelle (E) den Rand (b) am Zylindergehäuse (3) schliesst. Der Gas wird durch die zwischen zwei Lamellen entstandene Raumveränderung komprimiert. Wenn die Lamelle (D) den Rand (a) des Zylindergehäuses (3) überschreitet, wird die Verbindung mit der Druckleitung (6) geöffnet. Die Lamelle (E) drängt den komprimierten Gas zurück. Auf der Welle (1a) wird die mechanische Arbeit erzeugt.

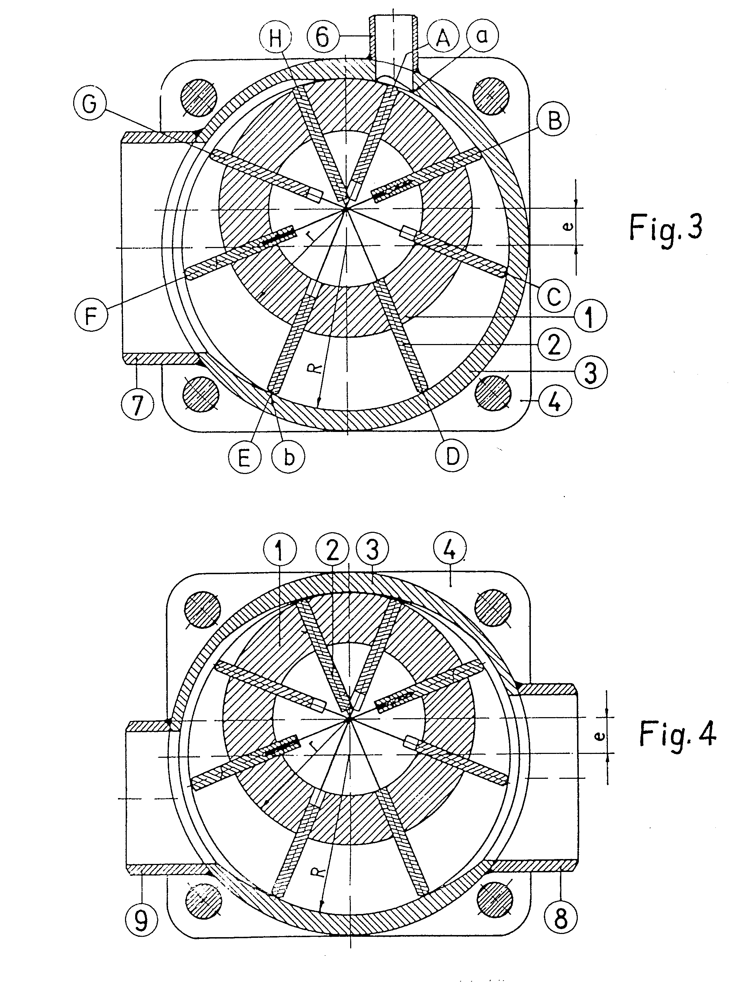

- Die Flüssigkeitspumpe stellt eine Arbeits - RLS dar (Abb.4.). Während der Rotor im Sinne des Uhrenzeigers rotiert, wird die Flüssigkeit von der Saugeleitung (8) übernommen und dann in die Druckleitung (9) am Zylindergehäuse (3) verdrängt. Auf der Welle (1a) wird die mechanische Arbeit erzeugt.

- Der Verbrennungsmotor stellt eine Betriebs - RLS dar (Abb. 5 und 6) Der Arbeitsvorgang ist ähnlich wie bei einem Kolbenmotor klassischer Ausführung.

Der Raum, (im weiteren Text als "Kammer" genannt, besitzt dieselbe Anwendungsmöglichkeit als "Zylinder" der klassischen Motore) welcher durch den Rotor (1) Lamellen (2) in der Lage (A-B) und den Zylindergehäuse (3), abgegrenzt ist kann als Saugevolumen betrachtet werden. Die dazugehörige Masse wird als Saugemasse betrachtet. Während der Rotor (1) im Sinne des Uhrenzeigers rotiert, wird der Anfangsvolumen der Luft vermindert und die Luft dadurch komprimiert (bei dem Otto-Vorgang wird eine Luft-Stoff Mischung verwendet).

Der Kompressionsvorgang innerhalb den mit Lamellen (A-B), (B-C) und (C-D) erfassten Gebiet ist im Laufe.

In der Kammer, welche sich zwischen der Lamellen (D-E) befindet, ist die Kompression beendet, (der Endezustand der Luft oder Luft-Stoff Mischung ist $V_2$, $P_2$, $T_2$) und die Kammer kann als der Kompressionsvolumen betrachtet werden.

Der Brennstoff wird unter dem hohen Druck durch die Düse (s) in den Kompressionsraum eingespritzt. Nach der Mischung mit warmer Luft, wird der Stoff verdampft und gezündet.

Während der Verbrennung erhöht sich die Temperatur. Da der Volumen abgegrenzt ist, wird durch die Verbrennung der Druckerhöht (bei dem Otto Vorgang wird die Luft-Stoff Mischung mit einer Zündkerze (S) angezündet). Die Expansion der Gase erfolgt in den Kammern zwischen der Lamellen (D-E), (E-F), (F-G) und (G-H). An der Welle (1a) wird mechanische Arbeit erzeugt. Der Auspuff beginnt wenn die Lamelle (H) den Rand (d) des Zylindergehäuses (3) überschreitet. Die ausgebrannte Gase strömen mit hoher Geschwindigkeit unter dem Druck durch den Anschluss (11) ab. Dadurch entsteht in der Kammer zwischen der Lamellen (H-A) ein Unterdruck. Zu dieser Kammer wird unter dem Druck frische Luftdurch den Anschluss (1o) zugeführt. In der Kammer (H-G) fällt der Druck schnell ab.

Während der Bewegung der Lamelle (H) vom Rande (c) zu (b) wird mit der frischen Luft die Kammer (H-G) gespült, und die Kammer (H-A) vorgeladet.

Der Vorladungsdruck wird mit der Klappe oder Ventil (V) am Anschluss (12) reguliert.

Wenn irgendwelche Lamelle (2) mit ihrer äusseren Mantellinie den Rand (a) des Zylindergehäuses (3) verschliesst, herrscht in der Kammer (bevor der Kompressionszustand stattfindet) der Anfangszustand $(V_1, P_1, T_1)$. Diese

Situation bezieht sich auf die Kammer welche sich vor der Lamelle (im Sinne der Uhrenzeigerbewegung) befindet.

Während einer Umdrehung des Rotors (1) wird in jeder Kammer der vollständige Arbetiszyklus durchgeführt: Luftspülung, Kompression, Expansion, Auspuff der verbrannten Gase. Das Kühlwasser zirkuliert durch die Hohlräume des Zylinder (3) - und Seitengehäuses (4,5).


Ich, Katarina Xigga, vereidigte Gerichtsdolmetscherin der
deutschen Sprache lt.Beschluss des Vorsitzenden des Bezirksgerichts in Zagreb Nr.4-SU/828 vom 13.12.1985. beglaubige
hiermit die Richtigkeit der Übersetzung.
Zagreb,den 22.12.1986

ANGABE FÜR DIE WIRTSCHAFTLICHE ANWENDUNG DER ERFINDUNG

Für die Ausarbeitung der Rotations-Lamellenmaschine sind keine besonderen Anweisungen und Anmerkungen erforderlich ausser jener Kenntnis, über die ein durchschnittlicher Fachmann aus dem Gebiet der Konstruktion und Herstellung von Maschinen verfügt. Es muss auf die Wahl des Materials, auf die Festigkeit der Teile und auf die Toleranz zwischen den einzelnen Elementen geachtet werden, damit die gesamte Maschinenkonstruktion auch funktional ist.

Ich, Katarina Xigga, vereidigte Gerichtsdolmetscherin der deutschen Sprache lt.Beschluss des Vorsitzenden des Bezirksgerichts in Zagreb Nr.4-SU/828 vom 13.12.1985 beglaubige hiermit die Richtigkeit der Übersetzung.
Zagreb, den 22.12.1986

0 230 054

<u>P A T E N T A N S P R U C H</u>

1. Die Rotations-Lamellenmaschine für mehrfache Anwendung gemäss Abb. 1 bis 6 verrichtet die Energieumwandlung durch die aufeinanderfolgende Veränderung des Raumes wo sich das Arbeitsmedium befindet, ist dadurch KENNZEICHNEND, dass der Hohlraum des Rotors (1) mit gerilltem Rande, wo die freien Lamellen (2) eingesetzt sind, mit der Welle (1a) zentrisch und mit dem Zylindergehäuse (3) exzentrisch ist.

2. Die Rotations-Lamellenmaschine für mehrfache Anwendung gemäss Anspruch 1, Abb. 2 ist dadurch KENNZEICHNEND, dass zwei gegenüber liegende Lamellen (2) in der Form identisch sind und der Abstand durch die Grenzschienen und Spiralfeder gehalten wird, eingelegt in die Rillen des hohlen Rotors (1) abwechselnd als Paar (2a) und (2b).

3. Die Rotations-Lamellenmaschine für mehrfache Anwendung gemäss Anspruch 1 und 2,bAbb.5 ist dadurch KENNZEICHNEND, dass zwischen dem Hohlraum des Rotors (1), der Radiusverkürzung (r) für den Wert(x), die Lamelle in der Lage (D-E) und des Zylindergehäuses ist ( $V_2$, $P_2$, $T_2$).

4. Die Rotations-Lamellenmaschine für mehrfache Anwendung gemäss Anspruch 1, 2 und 3, Abb.6 ist dadurch KENNZEICHNEND, dass zwischen dem Hohlraum des Rotors (1), des Radius (r), der Lamelle (2), in der Lage (D-E) auch der Raum des Zylindergehäuses ist ($V_2$, $P_2$ $T_2$).

5. Die Rotations-Lamellenmaschine für mehrfache Anwedung gemäss Anspruch 1,2,3 und 4, Abb. 5 und 6 ist dadurch KENNZEICHNEND, dass am Anschluss (12) das Ventil(V) ist.

Ich, Katarina Xigga, vereigite Gerichtsdolmetscherin der deutschen Sprache lt.Beschluss des Vorsitzenden des Bezirksgerichts in Zagreb Nr.4-SU/828 vom 13.12.1985 beglaubi hiermit die Richtigkeit der Übersetzung.
Zagreb,den 22.12.1986

6. Drehkolben-Kraft- oder Arbeitsmaschine mit einem feststehenden, einen im wesentlichen zylindrischen Innenraum aufweisenden Gehäuse (3) und einem achsparallel aber exzentrisch darin gelagerten, im wesentlichen zylindrischen Rotor (1), der über seinen Umfang verteilt und in entsprechenden Kanälen in bezug auf die Rotorachse im wesentlichen radial verschiebbar geführt eine Mehrzahl sich mit ihren Außenkanten abdichtend an die Wandung des Gehäuseinneren anlegender plattenförmiger Lamellen (2) enthält, dadurch gekennzeichnet, daß die die Lamellen (2) führenden Kanäle sich im Inneren des Rotors (1) treffen und die Lamellen im Bereich ihrer Innenkante ein dortiges überschneiden der Lamellen erlaubende Aussparungen aufweisen.

Fig. 1

Fig. 2

Fig. 3

Fig. 4

Fig. 5

Fig. 6

# 0 230 054

<br>

**EUROPÄISCHER TEILRECHERCHENBERICHT,**

Europäisches Patentamt

der nach Regel 45 des Europäischen Patent-übereinkommens für das weitere Verfahren als europäischer Recherchenbericht gilt

Nummer der Anmeldung

EP 86 11 8140

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-E- 31 237 (ZOLLER) <br><br> * Seite 1, Zeilen 1-7; Seite 4, Zeilen 35-41; Figuren 26,26a * <br><br> --- | 1,6 | F 01 C 1/344 <br> F 01 C 21/08 <br> F 02 B 53/08 |
| X | US-A-2 632 399 (HYRE) <br><br> * Spalte 1, Zeilen 1-6; Spalte 3, Zeile 38 - Spalte 4, Zeile 10; Figuren 1,2,8,9 * <br><br> --- | 1,2,6 | |
| X | US-H- 767 792 (DU PONT DE NEMOURS) <br> * Insgesamt * <br><br> --- | 1,6 | |
| A | DE-A-2 945 592 (TOYO KOGYO) <br><br> * Seite 4, Zeilen 1-4; Seite 10, Zeilen 30-34; Figur 1 * <br><br> ---------- | 5 | |

| RECHERCHIERTE SACHGEBIETE (Int. Cl.4) |
|---|
| F 01 C <br> F 04 C <br> F 02 B |

## UNVOLLSTÄNDIGE RECHERCHE

Nach Auffassung der Recherchenabteilung entspricht die vorliegende europäische Patentanmeldung den Vorschriften des Europäischen Patentübereinkommens so wenig, daß es nicht möglich ist, auf der Grundlage einiger Patentansprüche sinnvolle Ermittlungen über den Stand der Technik durchzuführen.

Vollständig recherchierte Patentansprüche: 1,2,5,6

Unvollständig recherchierte Patentansprüche:

Nicht recherchierte Patentansprüche: 3,4

Grund für die Beschränkung der Recherche:

Unklarheit

| Recherchenort | Abschlußdatum der Recherche | Prüfer |
|---|---|---|
| Den Haag | 10-04-1987 | WALVOORT |

<br>

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPA Form 1505.1 03.82